# EUROPÄISCHE PATENTSCHRIFT

(11) **EP 3 864 739 B1**
(45) Veröffentlichungstag und Bekanntmachung des Hinweises auf die Patenterteilung: **28.09.2022**
(21) Anmeldenummer: 19789622.8
(22) Anmeldetag: 10.10.2019
(51) Int. Cl.: H02K 5/08

(54) **ELEKTROANTRIEB, BREMSVORRICHTUNG UND FAHRZEUG**
ELECTRIC MOTOR, BRAKE SYSTEM AND VEHICLE
MOTEUR ÉLECTRIQUE, SYSTÈME DE FREINAGE ET VÉHICULE

(30) Priorität: 12.10.2018 DE 102018217555
(43) Veröffentlichungstag der Anmeldung: 18.08.2021
(73) Patentinhaber: Vitesco Technologies GmbH, 93055 Regensburg (DE)
(72) Erfinder: WEIMAR, Jan, 81737 München (DE)
(74) Vertreter: Vitesco Technologies
(86) Internationale Anmeldenummer: PCT/EP2019/077521
(87) Internationale Veröffentlichungsnummer: WO 2020/074662

(56) Entgegenhaltungen:
- WO-A1-2018/084564
- WO-A1-2018/104418
- WO-A2-2013/168122
- DE-A1-102007 061 107
- US-A- 5 705 868
- US-A1- 2007 241 625
- US-A1- 2011 006 626

## Beschreibung

Die vorliegende Erfindung betrifft einen Elektroantrieb, eine Bremsvorrichtung mit einem solchen Elektroantrieb sowie ein Fahrzeug mit einer solchen Bremsvorrichtung.

Der vorgeschlagene Elektroantrieb ist zur Verwendung in einer elektro-hydraulischen Bremsvorrichtung vorgesehen, wobei der Elektroantrieb einen Kugelgewindetrieb antreibt, der als solcher einen Kolben einer Zylinder-Kolben-Anordnung zur Erzeugung eines Bremsdruckes verschiebt.

Unter einem Fahrzeug ist dabei jede Art von Fahrzeug zu verstehen, welches zum Betrieb mit einem flüssigen und/oder gasförmigen Kraftstoff versorgt werden muss, insbesondere aber Personenkraftwagen und/oder Nutzfahrzeuge. Ferner kann es sich beim Fahrzeug auch um ein teilelektrisches oder vollelektrisches Fahrzeug handeln, insbesondere aber um Personenkraftwagen und/oder Nutzfahrzeuge.

Die US 2007/241 625 A1 betrifft einen bürstenlosen Motor, der ein Gehäuse, eine Halterung, die eine Öffnung des Gehäuses abdeckt, ein Resolvergehäuse, das einen Resolverstator eines Resolvers aufnimmt und das an der Halterung befestigt ist, Klauenabschnitte, die jeweils mit Einstellklauen versehen sind, die sich entlang einer Richtung im Wesentlichen parallel zu einer Achse eines Rotors erstrecken, und die an dem Resolvergehäuse vorgesehen sind, und Resolveranschlüsse zum Erfassen von Signalen von dem Resolverstator aufweist, die an dem Resolvergehäuse vorgesehen sind, wobei Durchgangslöcher, in die die Klauenabschnitte jeweils eingesetzt sind, in der Halterung ausgebildet sind.

Die US 2011/006626 A1 betrifft ein Isoliergehäuse für einen Motoranschluss, das eine Vielzahl von Stromversorgungselementen, von denen jedes einen Verbindungsanschluss zur Verbindung mit einer Stromversorgung und einen Spulenanschluss hat, an den eine Motorspule angeschlossen ist, und einen isolierenden Gehäusehauptkörper zum Isolieren der Vielzahl von Stromversorgungselementen voneinander und zum Halten der Stromversorgungselemente umfasst. Der isolierende Gehäusehauptkörper, der mit den Stromversorgungselementen einstückig ist, wird durch Einspritzgießen geformt, wobei die Vielzahl von Stromversorgungselementen in einem Isoierabstand voneinander beabstandet sind und nach dem Biegen in derselben Ebene angeordnet werden, dann wird der Verbindungsanschluss in eine Verbindungseinführöffnung, die einstückig mit dem isolierenden Gehäusehauptkörper geformt ist, hineingesteckt, und der Spulenanschluss wird in dieselbe Ebene wie die Umfangsfläche des isolierenden Gehäusehauptkörpers hineingesteckt.

Die DE 10 2007 061 107 A1 betrifft ein isolierendes Motorgehäuse, das erste bis vierte Stromversorgungselemente umfasst, die in ihrer Dickenrichtung so aufgeschichtet sind, dass sie voneinander beabstandet und isoliert sind, und die durch Umspritzen mit einem Gehäusekörper integriert sind, wobei ein Stromquellensteckverbinder, der Stromquellenanschlüsse der zweiten bis vierten Stromversorgungselemente als Steckverbinderanschlüsse verwendet, ebenfalls mit dem Gehäusekörper integriert ist.

Aufgabe der vorliegenden Erfindung ist es, einen möglichst kompakten Elektroantrieb für eine elektro-hydraulische Bremsvorrichtung bereitzustellen, welcher zudem möglichst einfach hergestellt und montiert werden kann. Der Elektroantrieb soll dabei möglichst kostengünstig herstellbar sein.

Diese Aufgabe wird durch einen Elektroantrieb mit den Merkmalen des Anspruchs 1 gelöst. Es wird ferner eine Verwendung eines solchen Elektroantriebs in einer elektro-hydraulischen Bremsvorrichtung eines Fahrzeugs vorgeschlagen und unter Schutz gestellt (vgl. Anspruch 10). Des Weiteren wird eine Bremsvorrichtung mit einem solchen Elektroantrieb vorgeschlagen und unter Schutz gestellt (vgl. Anspruch 11). Ferner wird ein Fahrzeug mit einer solchen Bremsvorrichtung unter Schutz gestellt (vgl. Anspruch 12). Vorteilhafte Ausführungsformen der Erfindung sind Gegenstand der Unteransprüche.

Die Kontaktelemente weisen dabei erste Kontaktabschnitte zur äußeren Kontaktierung des Stators mit einem Stecker und zweite Kontaktabschnitte zur inneren Kontaktierung des Stators mit den jeweiligen Kontaktelementen auf. Diese ersten und zweiten Kontaktabschnitte werden auch als Kontaktpins oder Kontaktlaschen bezeichnet.

Erfindungsgemäß ragen die ersten Kontaktabschnitte und die zweiten Kontaktabschnitte in einer Längsrichtung des Elektroantriebs aus dem Kunststoff des Gehäuseeinsatzes aus einer der Stator-Rotor-Einheit abgewandten Stirnfläche des Gehäuseeinsatzes heraus. Dadurch lässt sich eine Längserstreckung des Elektroantriebs minimieren.

Nach einer weiteren Ausführung der vorliegenden Erfindung ist der Gehäuseeinsatz zudem mit dem Stator formschlüssig verbunden. Dabei können sich einzelne am Stator angeformte, stiftartige Verankerungsabschnitte - auch Verankerungsdome genannt - aus Kunststoff in einer Längsrichtung des Elektroantriebs durch jeweils zugeordnete Öffnungen im Gehäuseeinsatz bis über eine der Stator-Rotor-Einheit abgewandte Stirnfläche des Gehäuseeinsatzes erstrecken und die Stirnfläche hintergreifen. Diese Kunststoff- Verankerungsabschnitte können dabei mit dem Gehäuseeinsatz verstemmt sein. Unter einer Verstemmung ist dabei eine Herstellung einer kraft- und formschlüssigen Verbindung zwischen dem jeweiligen Verankerungsabschnitt und dem Gehäuseeinsatz zu verstehen, wobei der Verankerungsabschnitt plastisch verformt wird. Es bedarf somit keines zusätzlichen, separaten Elements, um den Gehäuseeinsatz gegenüber dem Stator zur fixieren. Auch dadurch lässt sich die Längserstreckung des Elektroantriebs minimieren.

Nach einer weiteren Ausführung der vorliegenden Erfindung nimmt der Gehäuseeinsatz zudem ein Lager eines Rotors der Stator-Rotor-Einheit zentrierend auf und verspannt es dabei. Dabei kann der Gehäuseeinsatz über ein Federelement, vorzugsweise in Gestalt eines ringförmigen Federelements, bspw. in Gestalt einer Wellfeder, welches vom Gehäuseeinsatz eingefasst ist, gegen das Lager drücken, um es zu verspannen.

In einer besonders vorteilhaften Ausführung der vorliegenden Erfindung weist die Kontaktanordnung drei zueinander beabstandete, elektrisch leitendende Kontaktelemente zur elektrischen Versorgung dreier Phasen der Spule auf.

Weitere vorteilhafte Weiterbildungen der vorliegenden Erfindung ergeben sich aus den Unteransprüchen und der nachfolgenden Beschreibung bevorzugter Ausführungen. Hierzu zeigen:
- Fig. 1: eine perspektivische Darstellung eines vorgeschlagenen Elektroantriebs,
- Fig. 2: eine Explosionsdarstellung des in Fig. 1 gezeigten Elektroantriebs,
- Fig. 3: eine perspektivische Darstellung einer Anordnung zweier ein Zahnpaar bildender Statorzähne,
- Fig. 4: eine perspektivische Darstellung einer Spule des in Fig. 1 gezeigten Elektroantriebs,

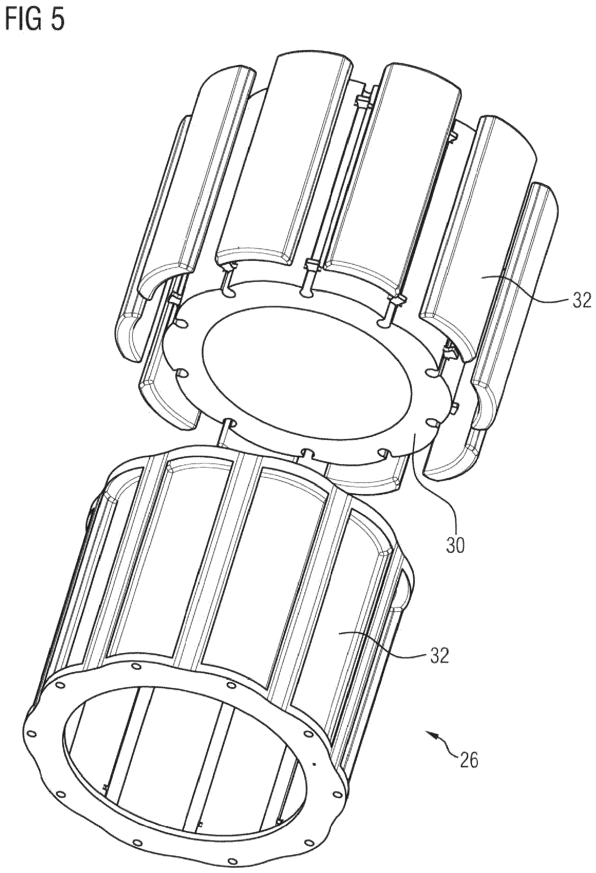

- Fig. 5: eine perspektivische Darstellung eines Rotors des in Fig. 1 gezeigten Elektroantriebs,
- Fig. 6: eine weitere perspektivische Darstellung des in Fig. 1 gezeigten Gehäuseeinsatzes nebst der in Fig. 4 gezeigten Spule,
- Fig. 7: eine vergrößerte perspektivische Darstellung einer inneren Kontaktierung der in Fig. 4 gezeigten Spule,
- Fig. 8: eine vergrößerte perspektivische Darstellung einer Verbindung zwischen dem in Fig. 1 gezeigten Gehäuseeinsatz und der in Fig. 4 gezeigten Spule,

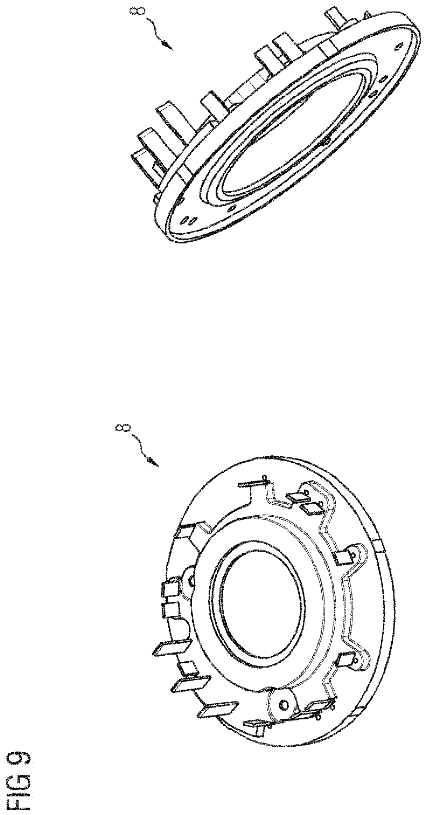

- Fig. 9: zwei weitere perspektivische Ansichten des Gehäuseeinsatzes,
- Fig. 10: drei Kontaktelemente des Gehäuseeinsatzes mit unverbogenen und verbogenen ersten und zweiten Kontaktabschnitten.

Der vorgeschlagene Elektroantrieb 2 ist zur Verwendung in einer elektro-hydraulischen Bremsvorrichtung vorgesehen. Der Elektroantrieb 2 ist als ein elektronisch kommutierter, drei-phasiger (Phasen U, V, W) Gleichstrommotor in Gestalt eines Innenläufers ausgebildet. Der Elektroantrieb 2 umfasst ein Gehäuse 4, welches z.B. aus einem tiefgezogenen Blech ausgebildet ist und welches über einen Flansch 6 an ein Gehäuse der elektro-hydraulischen Bremsvorrichtung anbringbar ist. Im Gehäuse 6 ist eine Stator-Rotor-Einheit 18, 26 verbaut, welche einen - hier nicht dargestellten - Kugelgewindetrieb zur Verschiebung eines Kolbens einer Zylinder-Kolben-Anordnung zur Erzeugung eines Bremsdruckes antreibt.

Im Zusammenhang mit einer anderen, als der hier vorgeschlagenen Applikation kann der im Rahmen dieser Figurenbeschreibung vorgeschlagene Elektroantrieb auch als ein elektronisch kommutierter Wechselstrommotor betrieben werden.

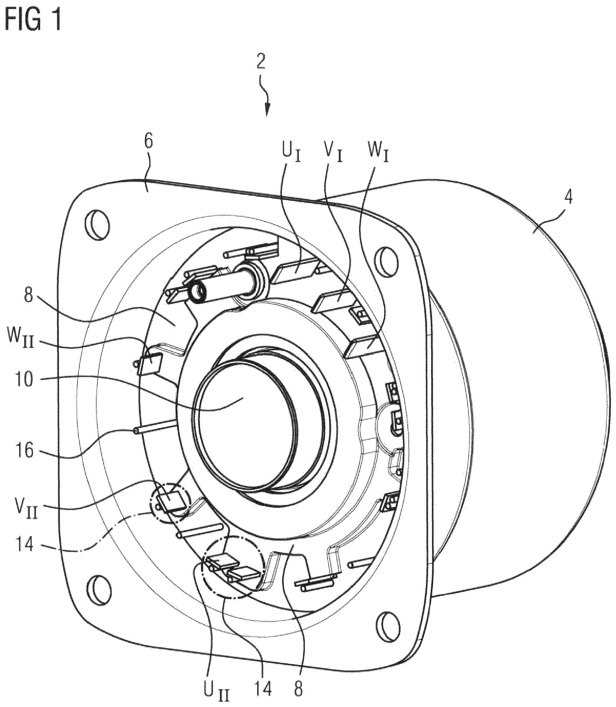

Mit dem Gehäuse 4 ist ferner ein separater, mit Kunststoff umspritzter Gehäuseeinsatz 8 gefügt, durch dessen mittige Öffnung sich ein Abschnitt 10 eines Rohrs 28 eines Rotors 26 erstreckt, in welchem der besagte Kugelgewindetrieb angeordnet ist (vgl. Fig. 1). Mit "separat" ist hierbei gemeint, dass der Gehäuseeinsatz 8 nicht Teil des Stators 18 ist.

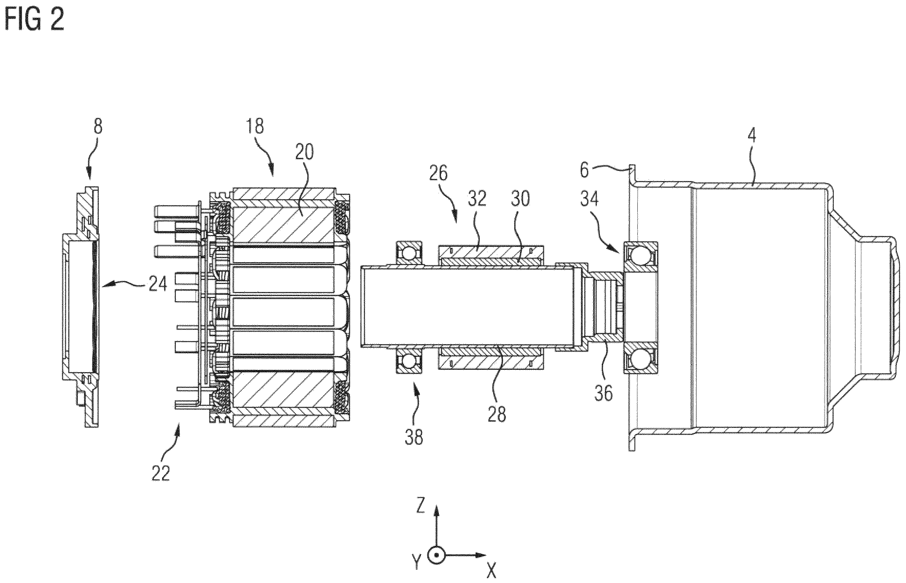

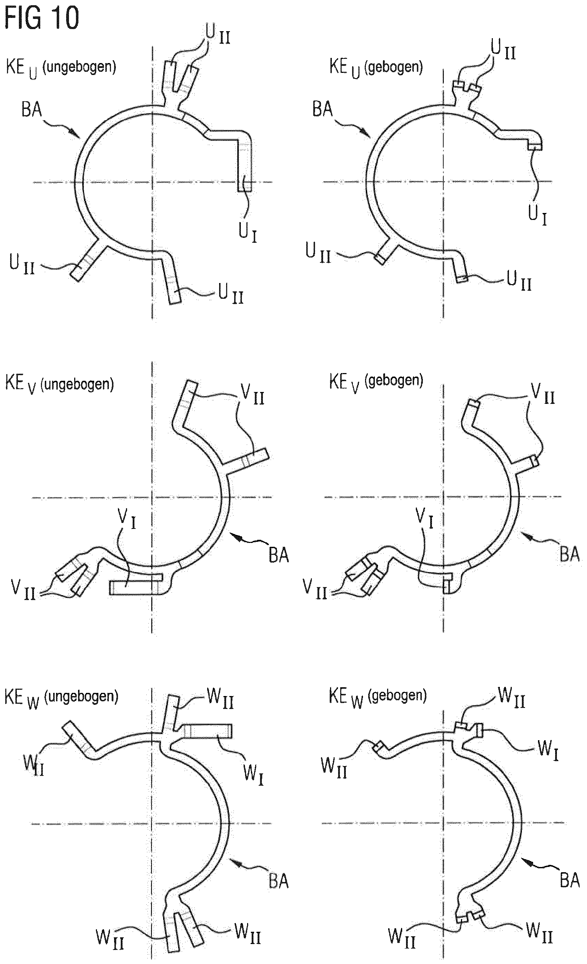

Der Gehäuseeinsatz 8 umschließt dabei eine Kontaktanordnung 22 von drei zueinander beabstandeten, elektrisch leitendenden Kontaktelementen KE_{U}, KE_{V}, KE_{W} (vgl. Fig. 2 i.V.m. Fig. 10), welche durch den Kunststoff des Gehäuseeinsatzes 8 voneinander elektrisch isoliert sind. Jedes der Kontaktelemente KE_{U}, KE_{V}, KE_{W} weist dabei einen teilkreisförmigen Basisabschnitt BA auf, an welchem ein einziger, erster Kontaktabschnitt U_{I}, V_{I}, W_{I} sowie insgesamt vier zweite Kontaktabschnitte U_{II}, V_{II}, W_{II} angeformt sind (vgl. Fig. 10).

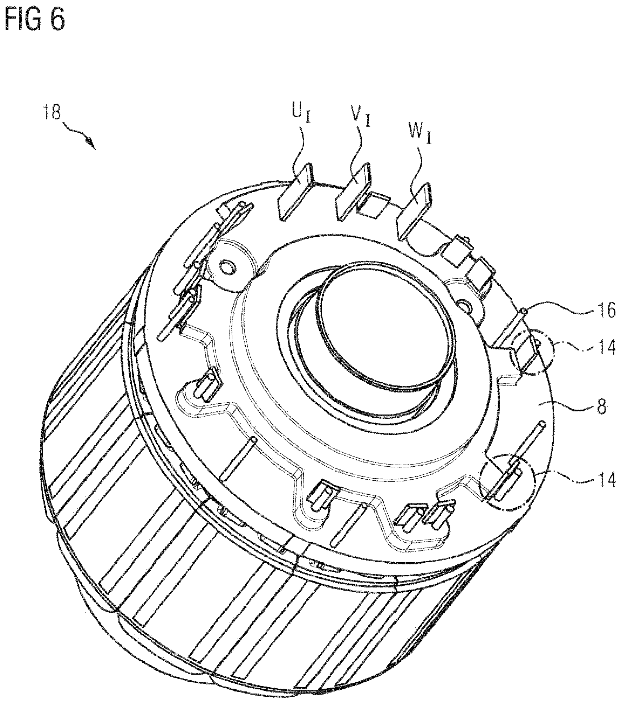

Aus einer der Stator-Rotor-Einheit 18, 26 abgewandten Stirnfläche des Gehäuseeinsatzes 8 ragen dabei sowohl die ersten Kontaktabschnitte U_{I}, V_{I}, W_{I} als auch die zweiten Kontaktabschnitte U_{II}, V_{II}, W_{II} heraus. Des Weiteren sind einzelne Drahtenden D_{A}, D_{E} einer Spule 20 eines Stators 18 durch zugeordnete Öffnungen im Gehäuseeinsatz 8 durch den Gehäuseeinsatz 8 nach außen geführt, so dass auch diese Drahtenden aus der besagten Stirnfläche herausragen. Mit einem Drahtende ist dabei entweder ein Drahtanfang D_{A} (A = Anfang) oder ein Drahtende D_{E} (E = Ende) einer Drahtwicklung DW_{U}, DW_{V}, DW_{W} der Spule 20 gemeint. Im Ausführungsbeispiel bilden insgesamt 6 Drahtwicklungen die Spule 20 aus. Diese Drahtenden sind dabei mit den jeweils zugeordneten zweiten Kontaktabschnitten U_{II}, V_{II}, W_{II} kontaktiert. Die Drahtenden können dabei mit den jeweiligen Kontaktabschnitten U_{II}, V_{II}, W_{II} durch eine Widerstandsverschweißung stoffschlüssig verbunden sein (vgl. Verbindung 14 in Fig. 1 oder Fig. 6).

Die ersten Kontaktabschnitte U_{I}, V_{I}, W_{I} dienen der äußeren Kontaktierung des Stators 18 mit einem Stecker. Die zweiten Kontaktabschnitte U_{II}, V_{II}, W_{II} hingegen dienen der inneren Kontaktierung des Stators 18 mit den drei Kontaktelementen KE₁, KE₂, KE₃ (vgl. Fig. 2 i.V.m. Fig. 10), die jeweils einer von drei Phasen U, V, W der Spule 20 zugeordnet sind.

Die Kontaktabschnitte U_{II}, V_{II}, W_{II} sind dabei paarweise einem Spulenabschnitt, d.h. einem Anfang einer Drahtwicklung DW_{U} und einem Ende einer dazu benachbarten Drahtwicklung DW_{V}, DW_{W} zugeordnet, wobei der Spulenabschnitt einer der Phasen U, V, W der Spule 20 angehört. Die sich gegenüber liegenden Paare der Kontaktabschnitte U_{II}, V_{II}, W_{II} kontaktieren dabei je einen, derselben Phase U, V oder W angehörenden Spulenabschnitt (vgl. Fig. 10). Die Teilung der Kontaktelemente KE_{U}, KE_{V}, KE_{W} kann dabei derart sein, dass die Beabstandung zwischen den einander zugeordneten Kontaktabschnitten U_{II}, V_{II}, W_{II} unterschiedlich ausfällt (vgl. Fig. 10). Diese Beabstandung kann aber grundsätzlich auch identisch ausfallen, sofern die Drahtenden D_{A}, D_{E} der Spule 20 entsprechend weggeführt sind.

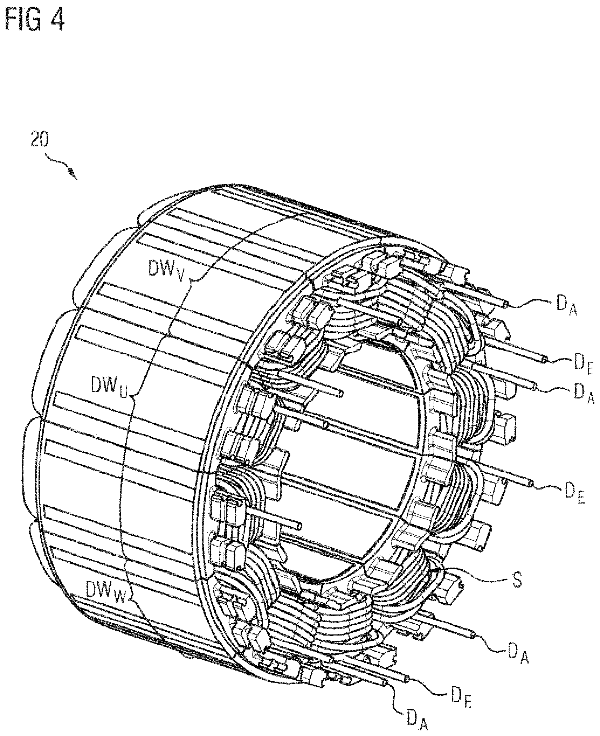

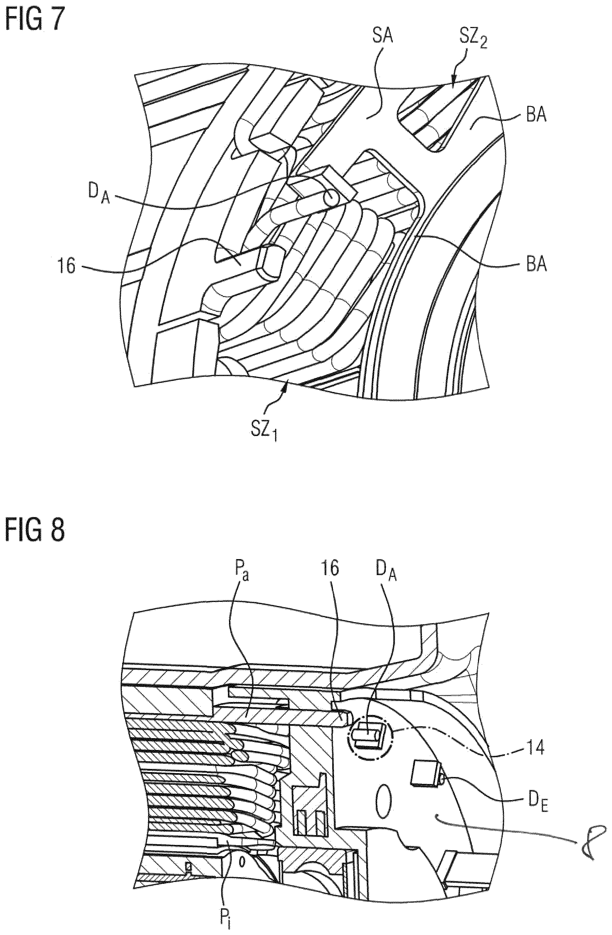

Die Fig. 2 und Fig. 7 i.V.m. mit der Fig. 10 veranschaulichen dabei, dass zwei benachbarte der pro Kontaktelement KE_{U}, KE_{V}, KE_{W} vorgesehenen insgesamt vier zweiten Kontaktabschnitte U_{II}, V_{II}, W_{II}, die als solche über einen zugeordneten Stegabschnitt SA am Basisabschnitt BA angeformt sind, einen Drahtanfang D_{A} einer der Drahtwicklungen DW_{U}, DW_{V}, DW_{W} mit einem Drahtende D_{E} einer dazu benachbarten Drahtwicklung DW_{U}, DW_{V}, DW_{W} verbinden. Diese beiden benachbarten Drahtwicklungen DW_{U}, DW_{V}, DW_{W} gehören dabei einer der drei Phasen U, V, W an (vgl. Fig. 4).

Ferner ragen aus der besagten Stirnfläche auch einzelne stiftartige Verankerungsabschnitte 16 aus Kunststoff des Stators 18 heraus, welche am Stator 18 angeformt sind und sich durch zugeordnete Öffnungen im Gehäuseeinsatz 8 durch den Gehäuseeinsatz 8 erstrecken. Diese Kunststoff-Verankerungsabschnitte 16 sind dabei mit dem Gehäuseeinsatz 8 formschlüssig verstemmt, etwa durch eine sog. Heißverstemmung.

Zur Versteifung des Gehäuses 4 können im Bereich des Flansches 6 gleichmäßig zueinander beabstandete Ausbeulungsbereiche im Gehäuseblech vorgesehen sein, in welchen jeweils eine radial nach innen orientierte Ausbeulung ausgebildet ist. Im Bereich der jeweiligen Ausbeulungen ist ferner ein Befestigungsloch im Flansch ausgebildet, um das Gehäuse 4 am Gehäuse der elektro-hydraulischen Bremsvorrichtung anbringen zu können.

Der Stator 18 ist mit dem Gehäuse 4 klemmend gefügt. Der vom Stator 18 umschlossene, permanent magnetisierte Rotor 26 umfasst ein Rohr 28, welches mit einer Nabe 30 pressverbunden ist. Die Nabe 30 trägt dabei eine Anordnung einer Mehrzahl von Permanentmagneten 32 in Gestalt von Schalenmagneten, die als solche mit der Spule 20 zusammenwirken. Das Rohr 28 ist ferner an einem seiner beiden Enden mit einer Lagerbuchse 36 laserverschweißt, welche sich als solche durch ein als "Festlager" fungierendes Schrägkugellager 34 erstreckt, über welches das Rohr 28 im Bereich eines Endes des Gehäuses 4 aufgenommen ist. Das Rohr 28 ist zudem durch ein als "Loslager" fungierendes Kugellager 38 aufgenommen, welches durch den Gehäuseeinsatz 8 zentrierend aufgenommen ist. Dabei drückt der Gehäuseeinsatz 8 über ein z.B. ringförmiges Federelement 24 - bspw. in Gestalt einer Wellfeder -, welches als solches vom Gehäuseeinsatz 8 eingefasst ist, gegen das Kugellager 38 bzw. dessen äußeren Ring. Das Federelement 24 kann dabei mit dem Gehäuseeinsatz 8 stoff schlüssig verbunden sein, indem es bei der Kunststoffumspritzung des Gehäuseeinsatzes 8 entsprechend mit umspritzt wird. Ferner deckt der Gehäuseeinsatz 8 die Stator-Rotor-Einheit 18, 26 im Sinne eines Schildes bzw. Gehäuse- und Lagerschildes ab.

Zusammenfassend vereint der Gehäuseeinsatz 8 folgende Funktionen:
- Aufnahme und Zentrierung des Loslagers 38,
- Verspannung des Loslagers 38,
- Innere und äußere Kontaktierung der Spule 20,
- Formschluss-Verbindung mit dem Stator 18 und
- Abdeckung der Stator-Rotor-Einheit 18, 26.

Die Integration all dieser Funktionen in den separaten Gehäuseeinsatz 8 geht mit einer Reduktion von Herstellungskosten und einer vereinfachten Montage eines solchen Elektroantriebs 2 einher. Hinzu kommt eine sehr kompakte Bauweise des Elektroantriebs 2.

Der vorgeschlagene Gehäuseeinsatz 8 reduziert zudem die in der Längsrichtung X - X des Elektroantriebs 2 zu berücksichtigenden Längentoleranzen (Reduktion einer Längentoleranzkette).

Zudem bewirkt die Integration der Kontaktanordnung 22 in den Gehäuseeinsatz 8 eine sehr kompakte bzw. sehr dichte Anordnung der die Spule 20 bildenden, einzelnen Drahtwicklungen DW_{U}, DW_{V}, DW_{W} im Gehäuse 4 (kompaktes bzw. dichtes "Packaging"), weil eine einen Abschnitt - z.B. einen Endabschnitt des Stators 18 - einfassende Kunststoffumspritzung entfällt, die als solche die besagte Kontaktanordnung umfasst.

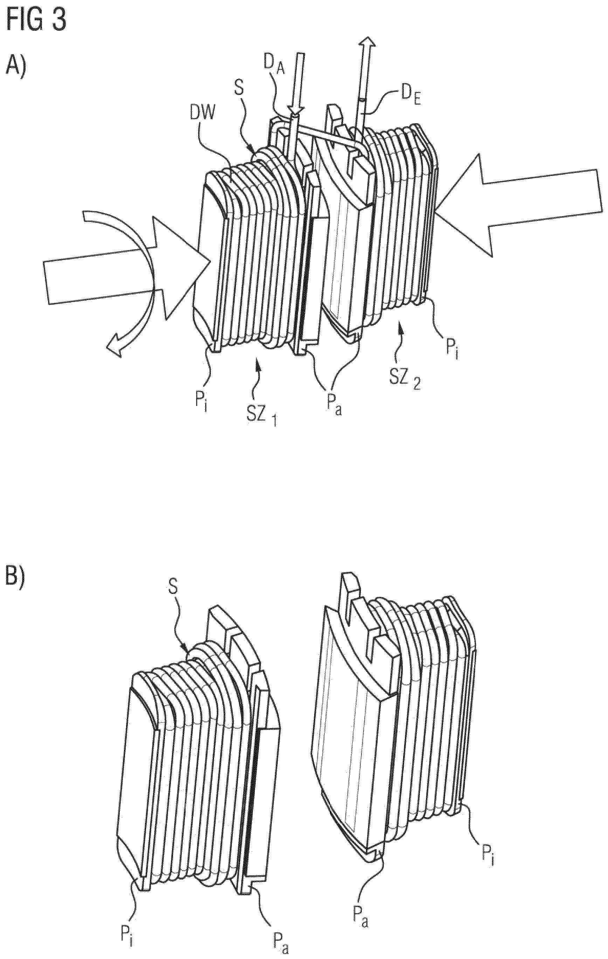

Der im Gehäuse 4 klemmend angeordnete Stator 18 umfasst dabei beispielhaft eine ringförmige Anordnung von insgesamt zwölf magnetisierbaren, Pole bildenden Statorzähnen SZ₁, SZ₂ ... SZ₁₁, SZ₁₂. Diese Statorzähne SZ₁, SZ₂ ... SZ₁₁, SZ₁₂ sind dabei in separate Zahnpaare SZ₁ & SZ₂, SZ₃ & SZ₄ ... SZ₁₁ & SZ₁₂ unterteilt, wobei jedes der Zahnpaare SZ₁ & SZ₂, SZ₃ & SZ₄ ... SZ₁₁ & SZ₁₂ mit einem eigenen, gemeinsamen und einen Teil der Spule 20 bildenden Metalldraht umwickelt ist (vgl. Fig. 3 und Fig. 4). Die beiden Drahtenden D_{A}, D_{E} der jeweiligen Zahnpaare (Fig. 3) sind dabei mit dem zuvor beschriebenen Gehäuseeinsatz 8 elektrisch kontaktiert.

Die einzelnen Statorzähne SZ₁, SZ₂ ... SZ₁₁, SZ₁₂ sind dabei aus einzelnen Blechlagen zu einem Blechpaket zusammengesetzt. Die einzelnen Blechpakete werden dabei mittels einer Verprägung zusammengehalten, die als solche mittels eines Stanzstempels in einer Längserstreckung X - X des Blechpakets erzeugt wird. Die Verprägung erstreckt sich dabei über die gesamte Längserstreckung X - X des jeweiligen Blechpakets, so dass zwischen den einzelnen Blechlagen ein Formschluss entsteht, der die Blechlagen zusammenhält.

An den einzelnen Statorzähnen SZ₁, SZ₂ ... SZ₁₁, SZ₁₂ ist dabei ein Spulenträger aus Kunststoff unter Ausbildung eines ersten Panels Pᵢ (i = innen) im Bereich des ersten stirnseitigen Endes des Statorzahnes und unter Ausbildung eines zweiten Panels Pₐ (a = außen) im Bereich des zweiten stirnseitigen Endes des Statorzahnes angespritzt. Das erste stirnseitige Panel Pᵢ ist dabei in einer Einbaulage des Stators 18 dem Rotor 26 zugewandt, wohingegen das zweite stirnseitige Panel Pₐ in der Einbaulage des Stators 18 dem Rotor 26 abgewandt ist. Daher kann das erste Panel Pᵢ auch als inneres Panel und das zweite Panel Pₐ auch als äußeres bezeichnet werden. Die dem jeweiligen Statorzahn zugeordnete, der Spule 20 angehörende Drahtwicklung DW_{U}, DW_{V}, DW_{W} ist dabei zwischen dem Panel Pᵢ und dem Panel Pₐ eingefasst. Der Spulenträger kann dabei derart verspritzt sein, dass er den jeweiligen Statorzahn entweder vollständig oder auch nur teilweise umhüllt (vgl. z.B. Fig. 3).

Die Fig. 3 veranschaulicht eine Anordnung zweier ein Zahnpaar bildender Statorzähne SZ₁, SZ₂, die zur gemeinsamen Umwicklung mit einem Metalldraht derart gegenüber liegend angeordnet werden, dass sich zunächst die in der Gebrauchslage des Zahnpaares äußeren Enden - bzw. die zweiten stirnseitigen Enden - gegenüber liegen.

Umwickelt wird dabei derart, dass in Bezug auf einen der beiden Zähne - hier SZ₁ - gegen den Uhrzeigersinn gewickelt wird, wohingegen in Bezug auf den anderen Zahn - hier SZ₂ - im Uhrzeigersinn gewickelt wird. Ferner wird derart umwickelt, dass sich zwischen dem jeweiligen ersten und zweiten Panel Pᵢ, Pₐ eine Stufung S in der Drahtwicklung DW_{U}, DW_{V}, DW_{W} ausbildet, wobei der dem Panel Pₐ zugewandte, äußere Drahtwicklungsabschnitt gegenüber dem dazu innenliegenden bzw. inneren Drahtwicklungsabschnitt stärker ausfällt. Aus diesem Grund ist auch das Panel Pₐ gegenüber dem Panel Pᵢ länger ausgebildet. Nach der Umwicklung werden die beiden Statorzähne SZ₁, SZ₂ zueinander verschwenkt (vgl. Pfeildarstellung in Fig. 3), um schließlich in das Gehäuse 4 gemäß der Darstellung in Fig. 4 eingesetzt werden zu können. Demnach werden bei der beschriebenen, beispielhaft zu verstehenden Ausführungsform insgesamt sechs Zahnpaare SZ₁ & SZ₂, SZ₃ & SZ₄ ... SZ₁₁ & SZ₁₂ nacheinander in das Gehäuse 4 eingesetzt. Die einzelnen Statorzähne SZ₁, SZ₂ ... SZ₁₁, SZ₁₂ sind dabei im Gehäuse 4 aneinander liegend gegeneinander und gegen das Gehäuse 4 verspannt.

An den einzelnen Spulenträgern ist auf Seiten des jeweiligen Panels Pₐ ein mit dem Spulenträger umspritzter, stiftartiger Verankerungsabschnitt 16 - auch Verankerungsdom genannt - angeformt, welcher in einer Längsrichtung X - X des Elektroantriebs 2 aus dem Panel Pₐ herausragt und welcher gewissermaßen eine lokale Verlängerung des Panels Pₐ darstellt (vgl. Fig. 7 und Fig. 8). Dieser Verankerungsabschnitt 16 erstreckt sich dabei - wie bereits zuvor beschrieben - durch eine zugeordnete Öffnung im Gehäuseeinsatz 8 bis über eine der Stator-Rotor-Einheit 18, 26 abgewandte Stirnfläche des Gehäuseeinsatzes 8, welche der Verankerungsabschnitt 16 zum Zwecke eines Formschlusses hintergreift. Es wird an dieser Stelle auf die zuvor erwähnte Heißverstemmung der einzelnen Verankerungsabschnitte 16 verwiesen, durch die ein unlösbarer Formschluss zwischen dem Gehäuseeinsatz 8 und dem Stator 18 bewirkt wird.

Die einzelnen Drahtenden D_{A}, D_{E} der Zahnpaare SZ₁ & SZ₂, SZ₃ & SZ₄ ... SZ₁₁ & SZ₁₂ sind in der Längsrichtung X - X des Elektroantriebes 2 durch zugeordnete Öffnungen im Gehäuseeinsatz 8 bis über die besagte, der Stator-Rotor-Einheit 18, 26 abgewandte Stirnfläche des Gehäuseeinsatzes 8 geführt und mit dem Gehäuseeinsatz 8 über jeweils zugeordnete Kontaktabschnitte U_{II}, V_{II}, W_{II} elektrisch kontaktiert. Die Kontaktierung ist dabei derart, dass jeweils ein Drahtanfang D_{A} einer der Drahtwicklungen DW_{U}, DW_{V}, DW_{W} mit einem Drahtende D_{E} einer dazu benachbarten Drahtwicklung DW_{U}, DW_{V}, DW_{W} mittels der vom Gehäuseeinsatz 8 umschlossenen Kontaktanordnung 22, und zwar über eines der besagten Kontaktelemente KE_{U}, KE_{V}, KE_{W} verbunden ist. Diese jeweils benachbarten und miteinander verbundenen Drahtwicklungen DW_{U}, DW_{V}, DW_{W} gehören dabei einer der drei Phasen U, V, W an.

Die vorgeschlagene Spulenausbildung trägt ebenfalls zu einer sehr kompakten bzw. sehr dichten Anordnung der die Spule 20 bildenden, einzelnen Drahtwicklungen DW_{U}, DW_{V}, DW_{W} bei (kompaktes bzw. dichtes "Packaging") . In Verbindung mit dem vorgeschlagenen Gehäuseeinsatz 8 ergibt sich im Ergebnis ein sehr kompakter Elektroantrieb 2, welcher zudem einfach hergestellt und montiert werden kann. Der Elektroantrieb 2 ist zudem kostengünstig herstellbar.

Obwohl in der vorhergehenden Beschreibung exemplarische Ausführungen erläutert sind, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Elektroantrieb (2) zur Verwendung in einer elektro-hydraulischen Bremsvorrichtung, umfassend:
• ein Gehäuse (4),
• eine durch das Gehäuse (4) aufgenommene Stator-Rotor-Einheit (18, 26) zur Verschiebung eines Kolbens einer Zylinder-Kolben-Anordnung zur Erzeugung eines Bremsdruckes sowie
• einen separaten Gehäuseeinsatz (8) aus einem Kunststoff, welcher mit dem Gehäuse (4) gefügt und mit einem Stator (18) der Stator-Rotor-Einheit (18, 26) elektrisch kontaktiert (14) ist,
wobei der Gehäuseeinsatz (8) eine Kontaktanordnung (22) zumindest zweier zueinander beabstandeter, elektrisch leitender Kontaktelemente (KE_{U}, KE_{V}, KE_{W}) zur elektrischen Versorgung zumindest zweier Phasen (U, V, W) einer Spule (20) des Stators (18) umschließt, wobei die Kontaktelemente (KE_{U}, KE_{V}, KE_{W}) durch den Kunststoff voneinander elektrisch isoliert sind,
wobei die Kontaktelemente (KE_{U}, KE_{V}, KE_{W}) erste Kontaktabschnitte (U_{I}, V_{I}, W_{I}) zur äußeren Kontaktierung des Stators (18) mit einem Stecker und zweite Kontaktabschnitte (U_{II}, V_{II}, W_{II}) zur inneren Kontaktierung des Stators (18) mit den jeweiligen Kontaktelementen (KEu, KEv, KEw) aufweisen,
**dadurch gekennzeichnet, dass**
die ersten Kontaktabschnitte (U_{I}, V_{I}, W_{I}) und die zweiten Kontaktabschnitte (U_{II}, V_{II}, W_{II}) in einer Längsrichtung (X - X) des Elektroantriebs (2) aus dem Kunststoff des Gehäuseeinsatzes (8) aus einer der Stator-Rotor-Einheit (18, 26) abgewandten Stirnfläche des Gehäuseeinsatzes (8) herausragen.

2. Elektroantrieb nach Anspruch 1, wobei der Gehäuseeinsatz (8) zudem mit dem Stator (18) formschlüssig verbunden (16) ist.

3. Elektroantrieb nach Anspruch 2, wobei sich einzelne am Stator (18) angeformte stiftartige Verankerungsabschnitte (16) aus Kunststoff in einer Längsrichtung (X - X) des Elektroantriebs (2) durch jeweils zugeordnete Öffnungen im Gehäuseeinsatz (8) bis über eine der Stator-Rotor-Einheit (18, 26) abgewandte Stirnfläche des Gehäuseeinsatzes (8) erstrecken und die Stirnfläche hintergreifen.

4. Elektroantrieb nach Anspruch 3, wobei die Kunststoff-Verankerungsabschnitte (16) mit dem Gehäuseeinsatz (8) verstemmt sind.

5. Elektroantrieb nach einem der Ansprüche 1 bis 4, wobei der Gehäuseeinsatz (8) zudem ein Lager (38) eines Rotors (18) der Stator-Rotor-Einheit (18, 26) aufnimmt, zentriert und dabei verspannt.

6. Elektroantrieb nach Anspruch 5, wobei der Gehäuseeinsatz (8) über ein Federelement (24), vorzugsweise in Gestalt eines ringförmigen Federelements, welches vom Gehäuseeinsatz (8) eingefasst ist, gegen das Lager (38) drückt.

7. Elektroantrieb nach einem der Ansprüche 1 bis 6, wobei die Kontaktanordnung (22) drei zueinander beabstandete, elektrisch leitendende Kontaktelemente (KE_{U}, KE_{V}, KE_{W}) zur elektrischen Versorgung dreier Phasen (U, V, W) der Spule (20) aufweist.

8. Elektroantrieb nach einem der Ansprüche 1 bis 7 wobei der Kunststoff des Gehäuseeinsatzes (8) umspritzt ist.

9. Elektroantrieb nach einem der Ansprüche 1 bis 8, wobei das Gehäuse (4) aus einem tiefgezogenen Blech ausgebildet ist.

10. Verwendung eines Elektroantriebs (2) nach einem der Ansprüche 1 bis 9 in einer elektro-hydraulischen Bremsvorrichtung eines Fahrzeugs.

11. Bremsvorrichtung mit einem Elektroantrieb nach einem der Ansprüche 1 bis 9.

12. Fahrzeug mit einer Bremsvorrichtung nach Anspruch 11.

## Claims

1. Electric drive (2) for use in an electrohydraulic brake system, comprising:
• a housing (4),
• a stator-rotor unit (18, 26) received by the housing (4) for displacing a piston of a cylinder-piston arrangement in order to generate a brake pressure and
• a separate housing insert (8) made of a plastic, which is joined to the housing (4) and is electrically contacted (14) with a stator (18) of the stator-rotor unit (18, 26),
wherein the housing insert (8) encloses a contact arrangement (22) of at least two spaced-apart, electrically conducting contact elements (KEu, KEv, KEw) for the electrical supply of at least two phases (U, V, W) of a coil (20) of the stator (18), wherein the contact elements (KE_{U}, KE_{V}, KE_{W}) are electrically insulated from one other by the plastic,
wherein the contact elements (KE_{U}, KE_{V}, KE_{W}) have first contact sections (U_{I}, V_{I}, W_{I}) for external contacting of the stator (18) with a plug and second contact sections (U_{II}, V_{II}, W_{II}) for internal contacting of the stator (18) with the respective contact elements (KEu, KEv, KEw),
**characterized in that**
the first contact sections (U_{I}, V_{I}, W_{I}) and the second contact sections (U_{II}, V_{II}, W_{II}) protrude in a longitudinal direction (X - X) of the electric drive (2) from the plastic of the housing insert (8) from an end face of the housing insert (8) facing away from the stator-rotor unit (18, 26) .

2. Electric drive according to Claim 1, wherein the housing insert (8) is additionally connected to the stator (18) in a form-fitting manner (16).

3. Electric drive according to Claim 2, wherein individual pin-like anchoring sections (16) made of plastic and integrally formed on the stator (18) extend in a longitudinal direction (X - X) of the electric drive (2) through respectively associated openings in the housing insert (8) beyond an end face of the housing insert (8) facing away from the stator-rotor unit (18, 26) and engage behind the end face.

4. Electric drive according to Claim 3, wherein the plastic anchoring sections (16) are caulked with the housing insert (8).

5. Electric drive according to one of Claims 1 to 4, wherein the housing insert (8) additionally receives, centers and braces a bearing (38) of a rotor (18) of the stator-rotor unit (18, 26).

6. Electric drive according to Claim 5, wherein the housing insert (8) presses against the bearing (38) via a spring element (24), preferably in the form of an annular spring element, which is enclosed by the housing insert (8).

7. Electric drive according to one of Claims 1 to 6, wherein the contact arrangement (22) has three spaced-apart, electrically conducting contact elements (KEu, KE_{V}, KE_{W}) for the electrical supply of three phases (U, V, W) of the coil (20).

8. Electric drive according to one of Claims 1 to 7, wherein the plastic of the housing insert (8) is overmolded.

9. Electric drive according to one of Claims 1 to 8, wherein the housing (4) is formed from a deep-drawn metal sheet.

10. Use of an electric drive (2) according to one of Claims 1 to 9 in an electrohydraulic brake system of a vehicle.

11. Brake system with an electric drive according to one of Claims 1 to 9.

12. Vehicle with a brake system according to Claim 11.

## Revendications

1. Entraînement électrique (2) destiné à une utilisation dans un dispositif de freinage électrohydraulique, comprenant :
• un boîtier (4),
• une unité de stator/rotor (18, 26) reçue par le boîtier (4) et permettant de déplacer un piston d'un ensemble cylindre/piston permettant de générer une pression de freinage, ainsi que
• un insert de boîtier séparé (8) en matière plastique qui est assemblé avec le boîtier (4) et mis en contact électrique (14) avec un stator (18) de l'unité de stator/rotor (18, 26),
l'insert de boîtier (8) entourant un ensemble de contacts (22) d'au moins deux éléments de contact (KE_{U}, KE_{V}, KE_{W}) électriquement conducteurs, espacés l'un de l'autre, pour l'alimentation électrique d'au moins deux phases (U, V, W) d'une bobine (20) du stator (18), les éléments de contact (KE_{U}, KE_{V}, KE_{W}) étant électriquement isolés les uns des autres par la matière plastique,
les éléments de contact (KEu, KEv, KEw) présentant des premières parties de contact (U_{I}, V_{I}, W_{I}) pour la mise en contact extérieure du stator (18) avec un connecteur, et des deuxièmes parties de contact (U_{II}, V_{II}, W_{II}) pour la mise en contact intérieure du stator (18) avec les éléments de contact respectifs (KEu, KEv, KE_{W}),
**caractérisé en ce que** les premières parties de contact (U_{I}, V_{I}, W_{I}) et les deuxièmes parties de contact (U_{II}, V_{II}, W_{II}), dans une direction longitudinale (X - X) de l'entraînement électrique (2), dépassent de la matière plastique de l'insert de boîtier (8) à partir d'une surface frontale, détournée de l'unité de stator/rotor (18, 26), de l'insert de boîtier (8).

2. Entraînement électrique selon la revendication 1, dans lequel l'insert de boîtier (8) est en outre relié (16) au stator (18) par complémentarité de forme.

3. Entraînement électrique selon la revendication 2, dans lequel des parties d'ancrage (16) individuelles en matière plastique, en forme de tige, rapportées au stator (18), s'étendent dans une direction longitudinale (X - X) de l'entraînement électrique (2) à travers des ouvertures respectivement associées dans l'insert de boîtier (8) jusque sur une surface frontale, détournée de l'unité de stator/rotor (18, 26), de l'insert de boîtier (8) et saisissent la surface frontale par l'arrière.

4. Entraînement électrique selon la revendication 3, dans lequel les parties d'ancrage (16) en matière plastique sont matées avec l'insert de boîtier (8).

5. Entraînement électrique selon l'une quelconque des revendications 1 à 4, dans lequel de plus, l'insert de boîtier (8) reçoit, centre et serre un palier (38) d'un rotor (18) de l'unité de stator/rotor (18, 26).

6. Entraînement électrique selon la revendication 5, dans lequel l'insert de boîtier (8) appuie sur le palier (38) par l'intermédiaire d'un élément faisant ressort (24), de préférence sous la forme d'un élément faisant ressort annulaire qui est entouré par l'insert de boîtier (8).

7. Entraînement électrique selon l'une quelconque des revendications 1 à 6, dans lequel l'ensemble de contacts (22) présente trois éléments de contact électriquement conducteurs (KE_{U}, KE_{V}, KE_{W}), espacés les uns des autres, pour l'alimentation électrique des trois phases (U, V, W) de la bobine (20).

8. Entraînement électrique selon l'une quelconque des revendications 1 à 7, dans lequel la matière plastique de l'insert de boîtier (8) est surmoulée.

9. Entraînement électrique selon l'une quelconque des revendications 1 à 8, dans lequel le boîtier (4) est réalisé à partir d'une tôle emboutie.

10. Utilisation d'un entraînement électrique (2) selon l'une quelconque des revendications 1 à 9 dans un dispositif de freinage électrohydraulique d'un véhicule.

11. Dispositif de freinage comprenant un entraînement électrique selon l'une quelconque des revendications 1 à 9.

12. Véhicule comprenant un dispositif de freinage selon la revendication 11.
